Europäisches Patentamt

European Patent Office

Office européen des brevets

(11) Numéro de publication : **0 256 946 B1**

## (12) FASCICULE DE BREVET EUROPEEN

(45) Date de publication du fascicule du brevet :
27.02.91 Bulletin 91/09

(51) Int. Cl.⁵ : **B60R 13/06, E06B 3/54**

(21) Numéro de dépôt : **87401860.9**

(22) Date de dépôt : **10.08.87**

(54) Vitrage pourvu d'un joint d'étanchéité profilé élastique, en particulier vitrage d'automobile.

(30) Priorité : **13.08.86 DE 3627537**

(43) Date de publication de la demande :
**24.02.88 Bulletin 88/08**

(45) Mention de la délivrance du brevet :
**27.02.91 Bulletin 91/09**

(84) Etats contractants désignés :
**AT BE CH DE ES FR GB IT LI LU NL SE**

(56) Documents cités :
**DE-A- 1 903 732**
**DE-A- 3 409 903**
**DE-A- 3 409 960**
**DE-U- 7 125 403**
**DE-U- 8 514 893**

(73) Titulaire : **SAINT-GOBAIN VITRAGE INTERNATIONAL**
**18, avenue d'Alsace**
**F-92400 Courbevoie (FR)**
**BE CH ES FR GB IT LI LU NL SE AT**
Titulaire : **VEGLA Vereinigte Glaswerke GmbH**
**Viktoriaallee 3-5**
**D-5100 Aachen (DE)**
**DE**

(72) Inventeur : **Kunert, Heinz, Dr.**
**Am Krieler Dom 23**
**D-5000 Köln 41 (DE)**

(74) Mandataire : **Leconte, Jean-Gérard et al**
**Saint-Gobain Recherche 39, Quai Lucien Lefranc**
**F-93304 Aubervilliers Cedex (FR)**

Jouve, 18, rue Saint-Denis, 75001 PARIS

## Description

La présente invention concerne un vitrage pourvu d'un joint d'étanchéité profilé élastique, en particulier un vitrage d'automobile, dans lequel le joint d'étanchéité profilé élastique est fixé dans la gorge d'insertion d'un cordon profilé relié solidement au vitrage.

Des vitrages de ce type peuvent être utilisés à la fois pour des glaces pivotantes, qui peuvent s'ouvrir, et pour des vitrages mis en place à demeure dans le châssis de fenêtre, dont l'étanchéité est aussi assurée par la mise en compression d'un joint d'étanchéité profilé élastiquement déformable contre le châssis de fenêtre. Ils peuvent être utilisés à la fois dans la construction de bâtiments et dans le secteur automobile.

Dans des vitrages connus de ce type, le cordon profilé présentant la gorge d'insertion pour le joint d'étanchéité profilé a la forme d'une bande profilée métallique ou d'un profilé d'encadrement en matière plastique et est relié au vitrage à l'aide d'une couche d'adhésif. Lors du collage du cordon profilé au vitrage, des difficultés peuvent cependant surgir parce que le cordon profilé qui, en raison de ses propriétés élastiques, subit nécessairement certaines forces de rappel, doit être fixé sur le vitrage à l'aide de moyens mécaniques auxiliaires jusqu' à ce que la matière adhésive soit durcie. Dans un procédé de fabrication en continu, une telle mesure est gênante.

Dans une autre réalisation connue, le profilé présentant la gorge d'insertion est appliqué sur la zone marginale du vitrage au moyen du procédé de moulage par injection. Ceci présente l'inconvénient qu'un moule à injection propre doit être réalisé pour chaque forme de vitrage, ce qui est onéreux, en particulier pour des vitrages de grandes dimensions.

L'invention a pour but de procurer un vitrage du type spécifié pour lequel les inconvénients précités soient évités. En particulier, le vitrage doit se prêter à une fabrication automatique et doit pouvoir être fabriqué à peu de frais.

Le vitrage pour automobile selon l'invention du type divulgué par DE-A-3 409 960 ou DE-A-3 409 903, c'est-à-dire il est pourvu d'un joint élastique qui est monté dans la gorge d'insertion d'un profilé constitué d'une matière adhésive déposée par extrusion sur le bord du vitrage et durcie pour établir une jonction durable avec la surface du vitrage opposée à l'aile du cadre de fenêtre ou avec un revêtement disposé sur cette surface. Selon l'invention, le vitrage est caractérisé en ce que le joint est un joint d'étanchéité et en ce que le profilé présente une section transversale en forme de chenal, constituant ladite gorge d'insertion, ouverte du côté opposé à la surface du vitrage, dont les ailes latérales sont pourvues de saillies orientées vers l'intérieur, ces saillies formant des contre-dépouilles pour le maintien, par jonction avec épousement de forme et transfert de force, du joint d'étanchéité élastique.

Ainsi, dans ce type connu de vitrage, le cordon profilé relié solidement au vitrage est constitué d'une matière adhésive durcie établissant une jonction durable avec le vitrage ou avec un revêtement disposé sur le vitrage et est élaboré par extrusion au moyen d'une buse d'extrudeuse profilée, directement sur le vitrage ou sur le revêtement disposé sur le vitrage. En outre, on utilise la technique d'extrusion bien connue telle qu'elle est décrite pour l'application d'un cordon d'adhésif profilé, par exemple, dans les documents DE-A-3 409 960 et 3 409 903. A l'aide de cette technique, des profilés de serrage, présentant une section transversale définie et des propriétés élastiques déterminées, sont appliquées sur le vitrage. Dans ce cas, les formes et dimensions de vitrages les plus diverses peuvent être pourvues sans difficulté d'un tel profilé, sans que des modifications ou des adaptations essentielles de l'installation de fabrication soient nécessaires. Il suffit simplement de modifier le programme de pilotage de la buse d'extrudeuse, qui est guidée sur la zone marginale du vitrage, pour l'adapter chaque fois au vitrage à munir du cordon profilé, ce qui est parfaitement possible sans difficulté et pratiquement sans les pertes de temps imposées par l'adaptation de l'installation.

Après le durcissement du cordon profilé de serrage, ce qui peut s'effectuer en un laps de temps pouvant être relativement court, le joint d'étanchéité profilé élastique peut être fixé sur ou dans le cordon profilé par effet de serrage, c'est-à-dire par une jonction à épousement de forme et transfert de force à la gorge d'insertion ou, par exemple aussi, par collage.

Différents modes de réalisation sont indiqués dans les revendications dépendantes.

Selon un mode de réalisation de l'invention, la section transversale du cordon profilé peut être telle qu'elle rend possible la fixation par serrage d'attaches de fixation métalliques de forme correspondante, ces attaches de fixation étant pourvues de boulons de fixation destinés à établir une jonction vissée ou serrée avec l'aile de fixation du châssis de fenêtre.

Des exemples de réalisation possibles pour des vitrages conformes à l'invention seront décrits plus en détail ci-après avec référence aux dessins annexés, dont les figures sont des vues en perspective, en partie en coupe, et dans lesquelles :

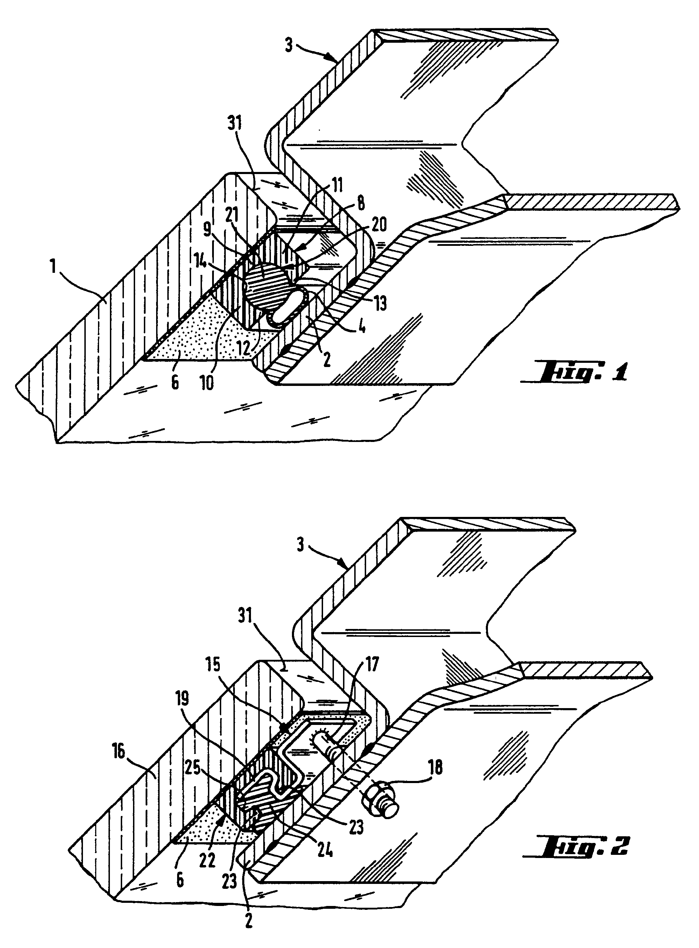

La Fig.1 est une vue d'une section marginale d'une fenêtre d'automobile pivotante en position fermée ;

La Fig. 2 est une vue d'une section marginale d'une fenêtre d'automobile vissée à l'aide de fixation d'un cadre de fenêtre, et

la Fig. 3 illustre une buse d'extrudeuse destinée à extruder le cordon profilé directement sur le vitrage.

Dans le cas des vitrages conformes à l'invention, il peut s'agir essentiellement de vitrages quelconques et, en particulier, aussi bien de vitrages utilisés dans le secteur du bâtiment que de vitrages prévus pour les véhicules.

Dans le cas du vitrage 1 décrit dans les exemples de réalisation suivants, il s'agit d'un vitrage de sécurité trempé qui est incorporé dans une carrosserie d'automobile à titre de glace latérale pivotante. Le vitrage 1 est, par exemple, fixé à la bride de la carrosserie, au niveau de son bord vertical antérieur dans la carrosserie, au moyen de charnières (non représentées), et est pressé, par l'intermédiaire d'un mécanisme de fermeture prévu sur le bord vertical postérieur, contre l'aile d'étanchéité 2 du cadre de fenêtre 3 de la carrosserie. L'étanchéité du vitrage 1 contre la bride d'étanchéité 2 est alors assurée par le joint d'étanchéité profilé en forme de boyau flexible 4 qui se déforme élastiquement sous l'effet de la pression d'application.

Une bande ou un encadrement 6 d'un revêtement opaque est disposé sur le vitrage 1 le long de son bord périphérique. Cet encadrement 6 est habituellement fait d'un émail céramique à cuire. Le cordon profilé 8 est collé sur ce revêtement d'encadrement. Le cordon profilé 8 est fait d'une matière adhésive adéquate extrudable, par exemple d'un polyuréthanne à un seul composant durcissant sous l'action de l'humidité ou une colle de réaction à deux composants à base de polyuréthanne. Il est extrudé à l'aide d'une buse d'extrudeuse, profilée de manière adéquate et présentant la section transversale voulue, directement sur le vitrage ou sur le revêtement en forme d'encadrement 6, le cas échéant après un traitement préalable du vitrage ou du revêtement en forme d'encadrement 6 au moyen d'un agent de nettoyage et/ou primaire appropriés. Des compositions adéquates pour des systèmes adhésifs, qui sont à envisager pour la fabrication du cordon profilé et pour la préparation du revêtement en forme d'encadrement 6, sont décrites, par exemple, dans le document US-A-3 779 794.

Le cordon profilé 8 présente une section transversale essentiellement en forme de U comportant une âme médiane 9 et deux ailes latérales 10 et 11. Les ailes latérales 10, 11 sont pourvues, dans leur zone d'extrémité, de saillies 12, 13 orientées vers l'intérieur, c'est-à-dire l'une vers l'autre. En dessous de ces saillies 12, 13, le creux 14 en forme de chenal du cordon profilé 8 s'élargit. Ce creux en forme de chenal 14, qui, comme dans le cas représenté, peut être d'une section à peu près circulaire, forme la gorge d'insertion pour le joint d'étanchéité profilé élastique 20.

Le joint d'étanchéité profilé 20 comporte une section en forme de boyau souple 4 et une section 21 qui présentent, en coupe, une forme correspondant à celle du creux en forme de chenal 14, c'est-à-dire, dans le cas représenté, une forme en coupe à peu près circulaire. La section 21, qui est pressée dans la gorge d'insertion formée par le creux en forme de chenal 14, et qui constitue avec celle-ci une jonction à épousement de forme et transfert de force, est de préférence faite d'une matière massive, c'est-à-dire une matière qui ne se comprime pas ou qui ne se comprime que faiblement.

Le creux en forme de chenal 14, qui constitue la gorge d'insertion, peut bien entendu aussi présenter une autre forme en coupe adéquate. Il suffit simplement que le cordon profilé 8 présente des saillies qui forment des affouillements par lesquels la section d'insertion 21 du joint d'étanchéité profilé est retenue avec épousement de forme. Etant donné que le cordon profilé 8 présente aussi une certaine déformabilité élastique, le joint d'étanchéité profilé 20 est retenu par une composante de force de serrage supplémentaire.

La Fig. 2 illustre une fenêtre d'automobile qui, contrairement à celle qui a été décrite plus haut, est une fenêtre fixée dans son cadre. Dans ce cas, la fixation du vitrage 16 s'effectue au niveau de la bride de fixation et d'étanchéité 2 du cadre de fenêtre 3 à l'aide de boulons filetés 17 qui traversent des trous correspondants dans l'aile de fixation et d'étanchéité 2 et sont immobilisés par des écrous 18. Les boulons 17 sont fixés à des attaches de fixation 15, par exemple par soudure. Les attaches de fixation 15 présentent une section d'extrémité 19 coudée et façonnée de manière à correspondre à la section transversale du creux en forme de chenal 25 du cordon profilé 22. La section d'extrémité 19 peut, par exemple, avoir la forme d'un S ou d'un Z, de telle sorte que l'attache de fixation 15 soit retenue en position par une des saillies 23.

Le joint d'étanchéité profilé 24 peut, par exemple, être fait d'un cordon de caoutchouc ou de caoutchouc expansé élastiquement déformable qui est disposé dans le creux en forme de chenal 25 du cordon profilé 22. Sous l'action de la jonction vissée 17, 18, le joint d'étanchéité profilé 24 se déforme, remplit le creux en forme de chenal 25 et est pressé avec une déformation correspondante contre la bride d'étanchéité 2.

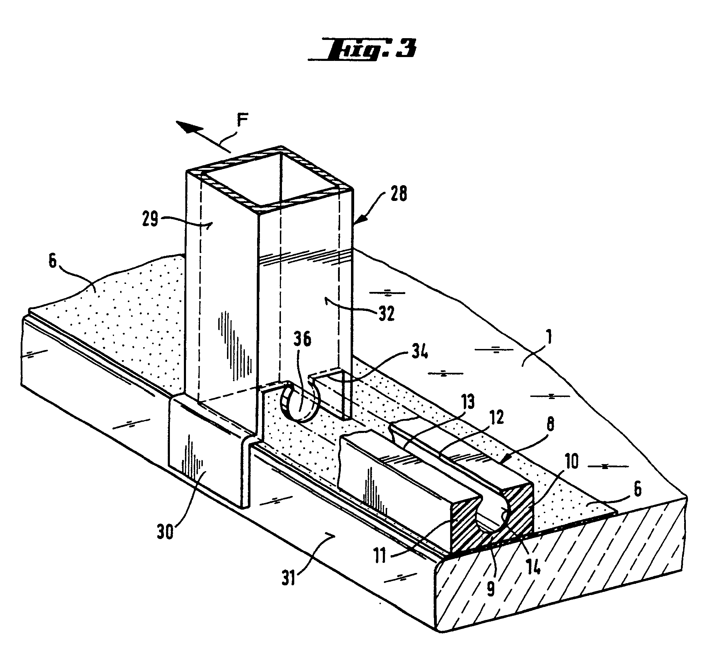

La Fig. 3 illustre le procédé au moyen duquel le cordon profilé 8 ou 22 est élaboré directement sur le vitrage 1 ou 16 ou sur le revêtement en forme d'encadrement 6. Le cordon profilé est extrudé sur le vitrage avec la section transversale souhaitée au moyen d'une buse d'extrudeuse 28. Dans le cas de la buse d'extrudeuse 28, il s'agit d'un tube de section transversale carrée ouvert à son extrémité inférieure, qui est posé sur la zone marginale du vitrage et est déplacé dans le sens de la flèche F le long du bord du vitrage. Pour faciliter le guidage de la buse d'extrudeuse, la paroi 29 de cette buse 28 est prolongée vers le bas avec un léger coude. La section de prolongement 30 de la paroi 29 forme ainsi une surface d'appui qui est pressée contre la face périphérique 31 du vitrage 1 et facilite de cette façon le guidage de la buse le long du pourtour du vitrage.

Du côté postérieur de la buse d'extrudeuse, vu dans le sens du déplacement de cette buse, un évidement 34, qui correspond à la section transversale du cordon profilé 8 ou 22, est formé dans l'extrémité inférieure de la paroi 32. La saillie 36 de la paroi 32, qui s'étend dans l'évidement 34, sert à produire le creux en forme de chenal 14 ou 25. La forme de cette saillie 36 correspond à la section transversale du creux en forme de chenal 14 ou 25. La matière adhésive, qui doit être extrudée sous la forme du cordon profilé 8, est comprimée à l'aide de procédés et de dispositifs connus, sous la pression nécessaire, dans la buse d'extrudeuse 28, pendant que la buse est déplacée à une vitesse uniforme le long du bord du vitrage.

## Revendications

1. Vitrage pour automobile, pourvu d'un joint élastique (20) qui est monté dans la gorge d'insertion d'un profilé (8) constitué d'une matière adhésive déposée par extrusion sur le bord du vitrage et durcie pour établir une jonction durable avec la surface du vitrage (1) opposée à l'aile (2) du cadre de fenêtre ou avec un revêtement (6) disposé sur cette surface, caractérisé en ce que le joint (20) est un joint d'étanchéité et en ce que le profilé (8) présente une section transversale en forme de chenal, constituant ladite gorge d'insertion, ouverte du côté opposé à la surface du vitrage, dont les ailes latérales (10, 11) sont pourvues de saillies (12, 13) orientées vers l'intérieur, ces saillies formant des contre-dépouilles pour le maintien, par jonction avec épousement de forme et transfert de force, du joint d'étanchéité élastique (20).

2. Vitrage pourvu d'un joint d'étanchéité profilé suivant la revendication 1, caractérisé en ce que le joint d'étanchéité profilé à insérer (20) comporte une section à insérer (21) coopérant par épousement de forme avec le creux (14) en forme de chenal formant la gorge d'insertion sans déformabilité élastique ou avec une faible déformabilité élastique, et une section d'étanchéité (4) élastiquement déformable qui fait saillie sur le cordon profilé (8).

3. Vitrage suivant l'une quelconque des revendications 1 et 2, caractérisé en ce qu'entre le cordon profilé et le joint d'étanchéité profilé est intercalée une couche d'adhésif.

4. Vitrage suivant l'une quelconque des revendications 1 à 3, caractérisé par des attaches (15), de préférence en métal, pouvant être insérées dans la gorge d'insertion en forme de chenal (25) du cordon profilé (22) et établissant une jonction à épousement de forme et à transfert de force avec le cordon profilé (22), qui sont pourvues d'un boulon de fixation (17) destiné à établir une jonction vissée ou serrée avec l'aile de fixation (2) du châssis de fenêtre (3).

5. Vitrage pourvu d'un joint d'étanchéité profilé suivant une ou plusieurs des revendications 1 à 4, caractérisé en ce que le cordon profilé (8) est fait d'une composition de polyuréthane à un seul composant durcissant au contact de l'humidité et apte à l'extrusion.

6. Vitrage pourvu d'un joint d'étanchéité profilé suivant une ou plusieurs des revendications 1 à 4, caractérisé en ce que le cordon profilé (8) est fait d'une colle de réaction à deux composants à base de polyuréthane apte à l'extrusion.

## Ansprüche

1. Autoglasscheibe mit einem in der Einstecknut eines Profils (8) angeordneten elastischen Verbindungsteil (20), wobei das Profil (8) zur Bildung einer dauerhaften Verbindung mit der dem Dichtflansch (2) des Fensterrahmens gegenüberliegenden Oberfläche der Glasscheibe (1) oder mit einem auf dieser Oberfläche angeordneten Belag (6) aus einer durch Extrusion auf den Rand der Glasscheibe abgelegten ausgehärteten Klebermasse besteht, **dadurch gekennzeichnet,** daß das Verbindungsteil (20) eine Dichtung ist und daß das Profil (8) einen kanalförmigen, die Einstecknut bildenden und auf der der Glasoberfläche gegenüberliegenden Seite offenen Querschnitt aufweist, dessen Seitenstege (10, 11) mit nach innen gerichteten und Hinterschneidungen bildenden Vorsprüngen (12, 13) für die form- und kraftschlüssige Halterung der elastischen Dichtung (20) versehen sind.

2. Glasscheibe mit einem Dichtverbindungsprofil nach Anspruch 1, dadurch gekennzeichnet, daß das Einsteckdichtprofil (20) einen mit dem die Einstecknut bildenden kanalförmigen Hohlraum (14) formschlüssig zusammenwirkenden Einsteckabschnitt (21) ohne oder mit nur geringer elastischer Verformbarkeit und einen über das Profil (8) überstehenden elastisch verformbaren Dichtabschnitt (4) aufweist.

3. Glasscheibe nach einem der Ansprüche 1 und 2, dadurch gekennzeichnet, daß zwischen dem Profilstrang und dem Einsteckdichtprofil eine Kleberschicht zwischengeschaltet ist.

4. Glasscheibe nach einem der Ansprüche 1 bis 3, gekennzeichnet durch in die kanalförmige Einstecknut (25) des Profilstrangs (22) einsetzbare und mit dem Profilstrang (22) eine form- und kraftschlüssige Verbindung bildende Befestigungsklammern (15), vorzugsweise aus Metall, die mit einem Befestigungsbolzen (17) für eine Schraub- oder Klemmverbindung mit dem Befestigungssteg (2) des Fensterrahmens (3) versehen sind.

5. Glasscheibe mit einem Dichtverbindungsprofil nach einem oder mehreren der Ansprüche 1 bis 4, dadurch gekennzeichnet, daß der Profilstrang (8) aus einer extrudierfähigen feuchtigkeitshärtenden Einkomponenten-Polyurethanzusammensetzung hergestellt ist.

6. Glasscheibe mit einem Dichtverbindungsprofil nach einem oder mehreren der Ansprüche 1 bis 4, dadurch gekennzeichnet, daß der Profilstrang (8) aus einem extrudierfähigen Zweikomponenten-Reaktionskleber auf Polyurethanbasis hergestellt ist.

## Claims

1. Glass plate for car, provided with an elastic joint (20) mounted in the insertion groove of a profiled band (8) constituted by an adhesive material deposited by extrusion on the edge of the glass plate and hardened in order to form a durable joint with the surface of the glass plate (1) opposite to the flange (2) of the window frame or with a coating (6) on said surface, characterized in that the joint (20) is a sealing joint and in that the profiled band (8) has a channel-like cross-section constituting said insertion groove and open on the side opposite to the surface of the glass plate, whose lateral flanges (10, 11) are provided with projections (12, 13) oriented towards the inside, said projections forming undercuts for retaining the elastic sealing joint (20) by a shape adaptation and force transfer junction.

2. Glass plate provided with a profiled sealing joint according to claim 1, characterized in that the profiled sealing joint (20) to be inserted has a section (21) to be inserted cooperating by shape adaptation with the channel-shaped hollow (14) forming the insertion groove without elastic deformability or with limited elastic deformability and an elastically deformable sealing section (4) projecting over the profiled band (8).

3. Glass plate according to either of the claims 1 and 2, characterized in that between the profiled band and the profiled sealing joint is inserted an adhesive layer.

4. Glass plate according to any one of the claims 1 to 3, characterized by preferably metallic attachments (15) insertable in the channel-like insertion groove (25) of the profiled band (22) and establishing a shape adaptation and force transfer junction with the profiled band (22) and which are provided with a fixing bolt (17) for forming a screwed or clamped junction with the fixing flange (2) of the window frame (3).

5. Glass plate provided with a profiled sealing joint according to one or more of the claims 1 to 4, characterized in that the profiled band (8) is formed from a single-camponent polyurethane composition hardening in contact with moisture and suitable for extrusion.

6. Glass plate provided with a profiled sealing joint according to one or more of the claims 1 to 4, characterized in that the profiled band (8) is formed from a polyurethane-based, two-component reaction adhesive suitable for extrusion.

**Fig. 1**

**Fig. 2**

Fig. 3